# FASCICULE DE BREVET EUROPEEN

(11) **EP 3 172 470 B1**
(45) Date de publication et mention de la délivrance du brevet: **16.05.2018**
(21) Numéro de dépôt: 15759855.8
(22) Date de dépôt: 20.07.2015
(51) Int. Cl.: F02D 9/10, F02M 26/48, F02M 26/70, F16K 37/00, F02M 26/00, F16K 1/22

(54) **VANNE DE CIRCULATION DE FLUIDE, NOTAMMENT POUR VÉHICULE AUTOMOBILE, A LOGEMENT DE RÉCEPTION D'UNE CIBLE DE CAPTEUR PRÉSENTANT DES NERVURES**
FLÜSSIGKEITSZIRKULATIONSVENTIL, INSBESONDERE FÜR EIN KRAFTFAHRZEUG, MIT AUSSPARUNG ZUR AUFNAHME EINES ZIEL EINES GERIPPTEN SENSORS
FLUID-CIRCULATION VALVE, IN PARTICULAR FOR A MOTOR VEHICLE, WITH RECESS FOR RECEIVING A TARGET OF A RIBBED SENSOR

(30) Priorité: 22.07.2014 FR 1457049
(43) Date de publication de la demande: 31.05.2017
(73) Titulaire: Valeo Systèmes De Contrôle Moteur, 95800 Cergy St Christophe (FR)
(72) Inventeur: SANCHES, Michael, F-94420 Le Plessis-Trevise (FR); DAVOULT, Guillaume, F-95892 CERGY-PONTOISE (FR)
(74) Mandataire: Garcia, Christine
(86) Numéro de dépôt international: PCT/FR2015/051994
(87) Numéro de publication internationale: WO 2016/012709

(56) Documents cités:
- FR-A1- 2 926 126
- FR-A1- 2 992 046
- JP-A- H11 295 331
- JP-A- 2008 216 043

## Description

La présente invention concerne une vanne de circulation de fluide, notamment pour véhicule automobile.

Elle est plus particulièrement destinée à des applications en tant que vanne doseuse de gaz d'admission de moteurs à combustion interne, qu'ils soient à essence ou Diesel. Elle pourra aussi trouver ses applications en tant que vanne de recirculation de gaz d'échappement ou « vanne EGR » (EGR pour « *Exhaust Gas Recirculation* »). D'autres applications de la vanne conforme à l'invention sont également possibles sans sortir du cadre de l'invention.

Il est connu des vannes de circulation de fluide comportant un corps présentant un conduit de passage du fluide, un volet, un arbre, libre en rotation, sur lequel est fixé le volet, et un organe rotatif de commande en rotation de l'arbre. La rotation du volet permet de régler le débit de fluide circulant dans le conduit.

L'arbre est par exemple constitué d'une tige métallique. L'organe de commande comprend une platine et un secteur denté en matière plastique surmoulé sur la platine. La tige métallique est assujettie à l'organe de commande par matriçage d'une extrémité axiale de la tige dans un orifice de la platine. En variante, l'organe de commande est surmoulé sur la tige métallique.

Il est connu par ailleurs de rapporter sur l'organe de commande, une cible de capteur magnétique permettant d'effectuer une mesure du positionnement angulaire de l'organe de commande, pour en déduire la position du volet dans le conduit.

Un premier moyen connu de rapporter une telle cible de capteur est de réaliser le surmoulage de l'organe de commande autour de la cible de capteur. Cependant, il a été constaté qu'une telle façon de procédé peut endommager la cible de capteur. Notamment, quand cette cible de capteur est un aimant, cette opération de surmoulage peut endommager mécaniquement l'aimant ou provoquer une démagnétisation de l'aimant, rendant le capteur inopérant.

Il a alors été proposé de surmouler la cible de capteur dans une pièce intermédiaire, laquelle est ensuite rapportée sur l'organe rotatif de commande, par exemple par soudage. Cependant, cette façon de procéder présente également un risque de démagnétisation de l'aimant formant la cible de capteur. En outre, cette façon de procéder ajoute des étapes dans le procédé de fabrication, ce qui induit un surcoût.

Le document FR2992046 divulgue une vanne de circulation de fluide selon le préambule de la revendication 1.

L'invention a pour objectif de pallier les problèmes évoqués plus haut et propose en ce sens une vanne de circulation de fluide, notamment pour véhicule automobile, comportant un corps présentant un conduit de passage d'un fluide, un volet obturateur du conduit, un arbre sur lequel est fixé le volet obturateur et un organe rotatif de commande de l'arbre dont la rotation commande sélectivement l'ouverture et la fermeture du conduit par le volet obturateur, dans lequel l'organe rotatif de commande comporte un logement de réception d'une cible de capteur dont la paroi comporte au moins un relief en saillie, de préférence sous la forme d'une nervure.

Ainsi, selon l'invention, le logement de réception de la cible de capteur, notamment de la cible de capteur magnétique, est formé sans que la cible de capteur soit présente à l'intérieur. Il n'y a donc pas de risque d'endommagement mécanique de cette cible de capteur, ni de perte de propriétés magnétiques. La cible de capteur peut ensuite être insérée dans le logement, cette insertion étant facilité du fait que sur au moins une paroi du logement, la cible de capteur n'est en contact qu'avec le relief en saillie de cette paroi. La cible de capteur et les parois du logement sont ainsi soumises à des contraintes mécaniques réduites. La paroi du logement est formée par quatre murets, chaque muret présentant au moins un relief en saillie ou nervure, de préférence au moins deux reliefs en saillies ou nervures.

Selon différents modes de réalisation, qui pourront être pris ensemble ou séparément :
- la cible de capteur et le logement ont une forme sensiblement parallélépipédique rectangle.
- le ou les reliefs en saillie ou nervures s'étendent sensiblement parallèlement à l'axe de rotation de l'organe rotatif de commande.
- la cible de capteur est un aimant plat, positionné de préférence dans le logement de façon orthogonale à l'axe de rotation de l'organe rotatif de commande, l'aimant plat étant, de manière encore préférée, centré sur l'axe de rotation de l'organe rotatif de commande.
- l'organe rotatif de commande comporte une roue à secteur dentée.
- l'organe rotatif de commande est solidaire de l'arbre, l'organe rotatif de commande étant de préférence surmoulé sur l'arbre.
- l'organe rotatif de commande est solidaire d'une jupe adaptée à entrainer en rotation un attelage solidaire de l'arbre, l'attelage étant guidé par une came à chemin de came, de telle sorte qu'une rotation de l'organe rotatif de commande provoque un mouvement de translation de l'arbre.
- La vanne comporte un ressort de rappel de l'organe rotatif de commande, de préférence dans une position de fermeture de la vanne de circulation ou dans une position d'ouverture maximale de la vanne.

L'invention se rapporte également à un procédé de fabrication d'une vanne de circulation de fluide selon l'invention, comprenant une étape de moulage de l'organe rotatif de commande formant un logement de réception d'une cible de capteur, dont la paroi comporte au moins un relief en saillie, de préférence sous la forme d'une nervure, et une étape ultérieure d'insertion d'une cible de capteur dans le logement.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- La figure 1 est une vue en coupe axiale d'une partie d'un exemple de réalisation d'une vanne de circulation de fluide.
- La figure 2 est vue, en perspective, de l'ensemble de l'arbre de commande et de l'organe d'entrainement de la vanne de la figure 1.
- La figure 3 montre, en perspective une platine de l'organe d'entrainement de la figure 2.
- La figure 4 illustre un agrandissement d'un détail de la figure 2.

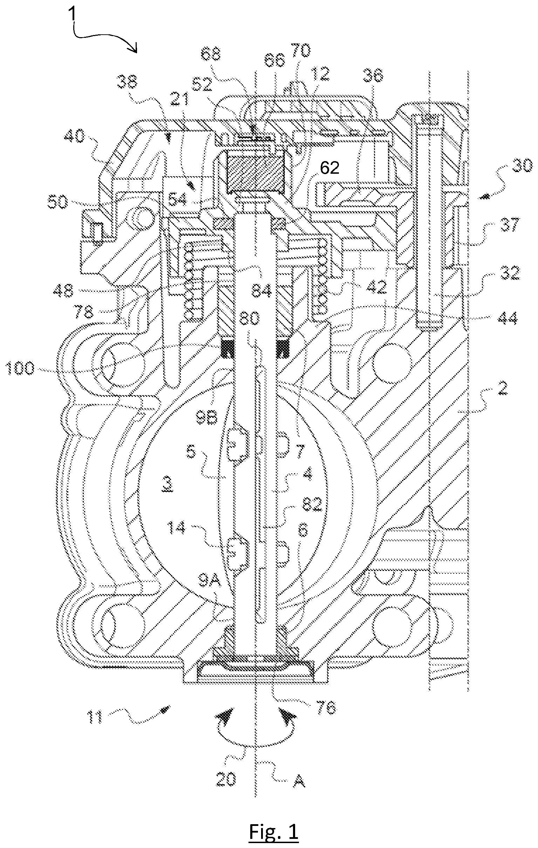

Comme illustré à la figure 1, l'invention concerne une vanne 1 de circulation de fluide, notamment pour véhicule automobile. Il s'agit ici d'une vanne de réglage du débit de gaz d'admission d'un moteur thermique, en particulier d'une vanne doseuse pour moteur diesel.

La vanne comprend un corps 2 à l'intérieur duquel est ménagé un conduit 3 de circulation du fluide. Le corps 2 est ici destiné à être monté, par l'intermédiaire de raccords, sur une ligne d'admission du moteur de manière que la partie des gaz circulant dans cette dérivation traverse le conduit et soit dirigée vers le moteur pour participer à la combustion. Les raccords et la ligne d'admission n'ont pas été représentés, étant bien connus en eux-mêmes.

Dans le corps 2 de la vanne 1, issu généralement de fonderie, sont reçus un arbre 4, libre en rotation avec, solidaire de celui-ci, un volet 5 permettant d'obturer plus ou moins le conduit 3 en fonction de la position angulaire de l'arbre 4, comme illustré par la flèche repérée 20 tournant autour de l'axe longitudinal A de l'arbre 4.

L'arbre 4 est lié en rotation au volet d'obturation 5 par des organes de fixation 14, ici un système vis-écrous, ou autres, ce qui permet au volet de pouvoir tourner avec l'arbre entre deux positions extrêmes dont l'une, ouverte totalement, comme sur la figure 1, laisse passer le fluide, et dont l'autre, non illustrée, bloque son passage, le volet étant alors appliqué contre la paroi latérale du conduit 3.

La vanne 1 comprend en outre, par exemple, des moyens de liaison pivot entre le corps 2 et l'arbre 4, ici deux paliers inférieur 6 et supérieur 7, pour le mouvement rotatif de l'arbre 4 par rapport à son axe longitudinal.

Plus particulièrement, deux trous alignés 9A, 9B sont ménagés dans le corps 2, perpendiculairement au conduit 3 en passant diamétralement par celui-ci, pour former des logements, de section circulaire, de passage de l'arbre 4. Ils reçoivent respectivement les moyens de liaison pivots, à savoir les deux paliers 6, 7. Ceux-ci sont cylindriques de section annulaire et sont, dans cet exemple, montés à force dans les trous 9A, 9B de façon à être immobilisés en position, en rotation et en translation, par rapport au corps 2 de la vanne. Ces paliers fixes 6, 7 sont réalisés, par exemple, en un matériau qui leur assure des propriétés autolubrifiantes et anticorrosives appropriées procurant une longévité renforcée. Pour cela, ils peuvent être en un alliage de cuivre et de nickel ou d'étain, ou en un acier inoxydable.

Dans ces deux paliers 6, 7 est reçu l'arbre 4 qui peut ainsi pivoter librement autour de l'axe A, par un ajustement glissant prévu entre l'arbre et les paliers. L'extrémité 11 de l'arbre, qualifiée d'inférieure par rapport à la figure 1, s'engage dans le palier correspondant 6, tandis que l'autre extrémité supérieure 12 traverse l'autre palier 7 et débouche vers l'extérieur du corps 2 de la vanne 1 pour être reliée à un organe 21 de commande en rotation de l'arbre 4.

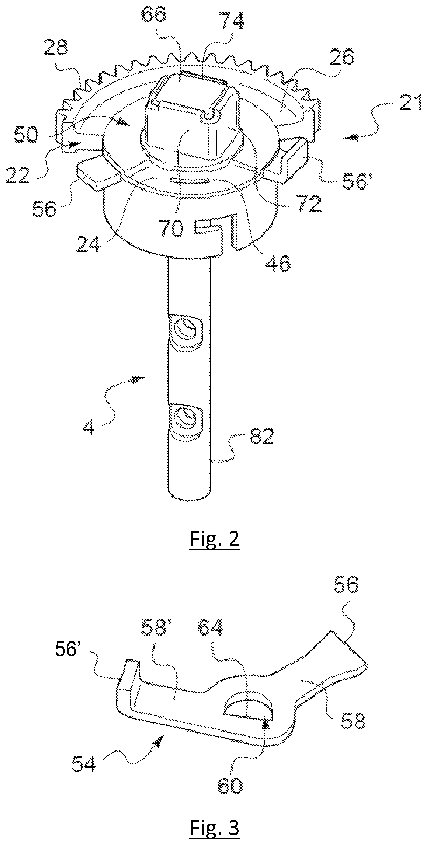

Comme cela est plus visible à la figure 2, l'organe de commande 21 est, par exemple, une roue à secteur denté 22 comprenant une partie centrale 24 centré sur l'arbre 4 et une excroissance radiale 26, formant un secteur d'angle légèrement supérieur au débattement angulaire du volet et munie de dents d'engrenage 28.

Si l'on se reporte de nouveau à la figure 1, on constate que le secteur denté 22 est ici lié en rotation à une roue de renvoie 30 libre en rotation par rapport au corps 2 autour d'un axe d'articulation 32 parallèle à l'axe longitudinal A de l'arbre 4. La vanne 1 comprend en outre, un moteur électrique, non illustré, notamment un moteur pas à pas. Le moteur électrique engrène sur un grand pignon 36 de la roue de renvoi 30 tandis que le secteur denté 22 engrène sur un petit pignon 37 de cette dernière. L'actionnement du moteur entraine de la sorte une rotation de la roue de renvoie 30 qui entraine à son tour une rotation du secteur denté 22 et donc du volet 5 par l'intermédiaire de l'arbre 4.

L'organe de commande 21, la roue intermédiaire 30 et/ou le moteur sont positionnés dans un logement 38 de la vanne fermé par un couvercle 40.

La vanne peut encore comprendre un ressort de torsion 42 permettant de positionner le volet 5 dans une position de repos, ici une position ouverte. Par position de repos, on entend une position prise lorsque le moteur de la vanne n'est pas actionné. Le ressort de torsion 42 prend appui, d'une part sur le corps 2, ici par l'intermédiaire d'un épaulement supérieur 44, et sur l'organe de commande 21, au niveau d'une fente 46 (figure 2). Le ressort de torsion 42 est centré, notamment, sur l'axe longitudinal A.

L'organe de commande 21 est ici surmoulé sur l'arbre 4. On assure de la sorte une solidarisation sans jeu entre ces deux pièces. On peut de plus les préassembler avant montage dans le corps 2.

L'organe de commande 21 est, par exemple, en matériau plastique et/ou l'arbre est, par exemple, en métal, notamment en acier inoxydable.

L'organe de commande 21 comprend ici des parois formant un puits 48, s'étendant axialement au-delà d'une paroi 50 s'étendant radialement, notamment orthogonalement à l'arbre 4, et portant les dents d'engrenage 28. L'organe de commande est surmoulé sur l'arbre 4 au niveau du puits 48. L'arbre peut en outre comprendre une gorge 52 dans laquelle l'organe de commande 4 est surmoulé. Le puits 48 et/ou la gorge 52 contribuent à une solidarisation efficace de l'organe de commande 21 et de l'arbre.

La vanne 1 peut aussi comprendre une platine 54, notamment métallique, définissant une ou des butées radiales 56, 56' (figures 2 et 3) délimitant une course angulaire de l'organe de commande 21. Plus précisément, la platine 54 est liée en rotation à l'arbre 4 et surmoulée par l'organe de commande 21. Par ailleurs, dans les positions angulaires extrêmes de la vanne 1, les butées radiales 56, 56' viennent en contact de formes, non-visibles, ménagées dans le corps 2 de la vanne. On définit de la sorte le débattement angulaire de l'organe de commande 21.

Comme mieux visible à la figure 3, la platine 54 comprend deux bras radiaux 58, 58' respectivement terminés par les butées radiales 56, 56'.

La platine 54 présente en outre, à l'intersection des bras 58, 58', un orifice 60 de passage de l'arbre 4. L'arbre 4 et l'orifice de passage 60 sont mutuellement configurés pour assurer une transmission des efforts de butée radiale de la platine 54 à l'arbre 4. L'arbre 4 présente ici pour cela un méplat 62 (figure 1) et l'orifice de passage 60 une portion droite 64. L'arbre 4 est ajusté dans l'orifice de passage 60 de manière que le méplat 62 prenne appui contre la portion droite 64. Le secteur denté 22 n'est ainsi pas sollicité lors des chocs en butée de la platine 54 contre le corps 2.

Si l'on se reporte à nouveau aux figures 1 et 2, on constate que la vanne 1 comporte en outre une cible de capteur 66. Il s'agit, par exemple, d'une cible de capteur magnétique, comme un aimant plat, c'est-à-dire d'un aimant parallélépipédique rectangle dont les deux plus grandes faces sont disposées perpendiculairement à l'axe de rotation A de l'organe de commande 21. L'aimant 66 génère un champ magnétique destiné à influer sur un capteur magnétique 68, notamment une sonde à effet Hall, ici positionné sur le couvercle 40 de la vanne 1.

L'aimant plat 66 est sensiblement parallélépipédique rectangle. Il présente deux faces orientées de façon orthogonale à l'axe longitudinal A de l'arbre 4. Il est en outre centré sur l'axe longitudinal A. L'aimant plat génère localement de la sorte des lignes de champs parallèles, dans un plan orthogonal à l'axe longitudinal A. Ainsi, le positionnement angulaire de l'organe de commande 21 et donc la position du volet 5 correspondent à un positionnement angulaire identique des lignes de champs, ce qui fiabilise la mesure.

La vanne 1 comprend en outre un logement 70 de réception de la cible de capteur 66. Le logement 70 est avantageusement issu du moulage de l'organe de commande 21 de manière à également réduire les jeux angulaires entre les pièces mobiles de la vanne 1. Une telle façon de réaliser le logement 70 permet également de limiter le nombre d'opérations nécessaires à la fabrication de la vanne. La cible de capteur 66 est cependant insérée dans le logement 70, postérieurement à la formation de ce logement 70. Ainsi, le logement 70 n'est pas obtenu par surmoulage de la cible de capteur 66. Ceci permet d'éviter d'endommager la cible de capteur durant l'opération de moulage de l'organe de commande 21.

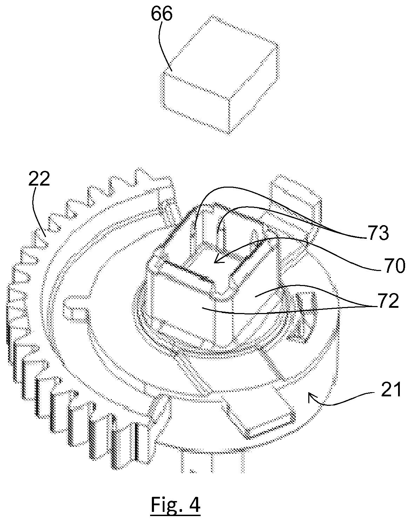

Cependant, le logement 70 est formé ici de quatre parois 72 qui présentent des reliefs 73 (figure 4) en saillie dans le logement 70. Ces reliefs en saillie 73 permettent le montage serré de la cible de capteur 66, sans risque de sur-contraintes sur celle-ci. En outre, ces reliefs en saillie 73 permettent un blocage transversal satisfaisant de la cible de capteur 66, permettant une mesure précise à l'aide du capteur 68.

Ici, les reliefs en saillie sont réalisés sous la forme de nervures 73 rectilignes, s'étendant parallèlement à l'axe de rotation de l'organe de commande 21. Ces nervures présentent en outre une zone ayant la forme d'un demi-cône, orienté vers l'ouverture du logement 70 permettant l'insertion de la cible de capteur, suivie d'une zone ayant la forme d'un demi-cylindre, située à l'opposé de l'ouverture du logement 70 permettant l'insertion de la cible de capteur, par rapport à la zone ayant une forme de demi-cône. La forme de demi-cône facilite l'insertion de la cible de capteur 66 dans le logement 70 et évite un blocage de celui-ci sur une arête vive des nervures 73.

Ici, le logement 70 présente deux nervures 73 sur chacune des quatre parois 72, les nervures 73 étant disposées en face les unes des autres, par paires. Cette configuration présente un bon compromis entre les contraintes appliquées sur la cible de capteur et les parois du logement, d'une part, et la force de maintien de la cible de capteur dans le logement, d'autre part.

Le logement 70 et la cible de capteur 66 présentent de préférence des formes complémentaires, notamment des formes de parallélépipède rectangle. La cible de capteur 66 est, par exemple, positionné à plat sur un fond du logement 70.

Les parois 72 du logement 70 présentent en outre une languette 74, en saillie selon l'axe A de rotation de l'organe de commande 21. Ces languettes 74 sont rabattues sur la cible de capteur 66 pour assurer son maintien dans le logement 70, une fois la cible de capteur 66 insérée dans le logement 70. Ces languettes peuvent être rabattues par tout procédé connu. De préférence, cependant, ces languettes sont rabattues par un procédé de conformage par ultrason, par exemple par un procédé connu sous son nom anglais de « ultrasonic staking ». Un tel procédé de conformage par ultrason présente l'avantage de ne pas provoquer d'apport thermique dans les parois du logement et de présenter de faibles efforts d'écrasement des languettes 74, limitant ainsi les risques d'endommagement. Il permet ainsi d'éviter une démagnétisation et un endommagement mécanique de la cible de capteur 66.

L'arbre 4 tel qu'illustré comprend par ailleurs une butée axiale 76, située au niveau de l'extrémité 11 de l'arbre, opposée à celle où se trouve l'organe de commande 21. On facilite de la sorte le montage dans le corps 2 de l'ensemble mobile formé par l'organe de commande 21 et l'arbre 4. En effet, le segment longitudinal 78 de l'arbre 4 s'étendant du volet obturateur 5 à l'organe de commande 21 n'a pas alors à coopérer avec une butée axiale, celle-ci étant prévue en partie basse de l'arbre 4. Le segment 78 est appelé par la suite zone libre.

Cette dernière est plus particulièrement située ici d'une extrémité supérieure 80 d'une fente 82 de fixation du volet obturateur 5 à une extrémité inférieure 84 du puits 48. Autrement dit, la zone libre 78 est située au droit du passage 9B de l'arbre de commande 4 vers le logement 38 accueillant l'organe de commande 21.

La butée axiale 76 comprend une rondelle, fixée à une extrémité distale de l'arbre 4. L'arbre peut pour cela comprendre un pion de fixation à l'une de ses extrémités longitudinales et la rondelle présenter, en son centre, un orifice de fixation, inséré sur le pion, la rondelle étant soudées sur le pion 88.

La butée axiale 86 et le corps 2 sont, de manière avantageuse, mutuellement configurés pour bloquer axialement la rondelle sur le corps 2 dans un premier sens, orienté vers l'organe de commande 21, le premier sens correspondant au sens d'un effort axial imprimé à l'arbre par le ressort de torsion 42.

Le corps comprend ici pour cela un premier épaulement prévu au niveau du logement 9A de passage de l'arbre 4, qui accueille ici la butée axiale.

Comme déjà dit, la vanne comprend un moyen de liaison pivot, ici le pallier inférieur 6, entre l'arbre 4 et le corps 2, le moyen de liaison pivot étant monté en butée axiale sur le corps 2 dans le premier sens. Quant à la butée axiale, elle est en appui axial sur le palier inférieur 6.

Par ailleurs, la vanne est configurée pour que la butée axiale soit aussi bloquée axialement dans un second sens, opposé au premier sens.

Comme évoqué plus haut et comme cela est plus visible à la figure 2, l'organe de commande 21 comprend une fente 46. Cette dernière accueille une extrémité d'un ressort de torsion 42, non-illustré à cette figure mais visible sur la figure 1. La fente 46 traverse axialement la paroi 50 de l'organe de commande 21. La fente 46 définit avantageusement deux positions d'accrochage pour le ressort de torsion 42.

La fente 46 est orientée, par exemple, selon un secteur d'angle, centré sur l'axe longitudinal A de l'arbre 4. La fente 46 définit de la sorte une position d'accrochage du ressort de torsion 42 à chacune de ses extrémités angulaires.

Le montage des pièces évoquées plus haut a lieu de la façon suivante. Un joint d'étanchéité 100 et les paliers supérieur 7 et inférieur 6 sont disposés dans le corps 2 respectivement au niveau d'épaulements respectifs dont le premier épaulement. L'ensemble mobile comportant l'organe de commande 21 et l'arbre 4 est alors monté dans les logements de passage 9A, 9B en étant introduit du haut vers la bas, le ressort de torsion 42 ayant été installé entre l'organe de commande 21 et le corps 2. La rondelle est ensuite soudée sur l'arbre 4 et la pièce de fermeture mise en place.

Une vanne telle qu'elle vient d'être décrite trouve ses applications en particulier en tant que vanne de circulation de fluide pour véhicule automobile. En particulier, une telle vanne peut être utilisée comme vanne doseuse de gaz d'admission de moteurs à combustion interne ou comme vanne de recirculation des gaz d'échappement ou vanne EGR.

L'invention ne se limite pas au seul exemple de réalisation décrit ci-avant en regard des figures, à titre d'exemple illustratif et non limitatif.

Notamment la vanne peut présenter de nombreuses géométries différentes. Par exemple, l'organe rotatif de commande peut être solidaire d'une jupe adaptée à entrainer en rotation un attelage solidaire de l'arbre, l'attelage étant guidé par une came à chemins de came, de telle sorte qu'une rotation de l'organe rotatif de commande provoque un mouvement de translation de l'arbre. Dans ce cas, l'ouverture ou la fermeture du conduit dans la vanne est réalisé en soulevant une soupape d'un siège de soupape.

Par ailleurs, le nombre et la forme des reliefs des parois du logement peuvent être différents de ce qui a été décrit en regard des figures. Notamment, les parois du logement peuvent présenter un nombre plus limité ou plus important de reliefs, qui peuvent prendre d'autres formes que celle d'une nervure.

## Revendications

1. Vanne de circulation de fluide, notamment pour véhicule automobile, comportant un corps (2) présentant un conduit (3) de passage d'un fluide, un volet (5) obturateur du conduit (3), un arbre (4) sur lequel est fixé le volet obturateur (5) et un organe (21) rotatif de commande de l'arbre (4) dont la rotation commande sélectivement l'ouverture et la fermeture du conduit (3) par le volet obturateur (5), dans lequel l'organe rotatif de commande (21) comporte un logement de réception (70) d'une cible de capteur (66) dont la paroi (72) est formée par quatre murets (72), **caractérisée en ce que** chaque muret (72) présente au moins un relief en saillie ou nervure (73), de préférence au moins deux reliefs en saillies ou nervures (73).

2. Vanne de circulation de fluide selon la revendication 1, dans laquelle la cible de capteur (66) et le logement (70) ont une forme sensiblement parallélépipédique rectangle.

3. Vanne de circulation de fluide selon l'une quelconque des revendications précédentes, dans laquelle le ou les reliefs en saillie ou nervures (73) s'étendent sensiblement parallèlement à l'axe de rotation (A) de l'organe rotatif de commande (21).

4. Vanne de circulation de fluide selon l'une quelconque des revendications précédentes, dans laquelle la cible de capteur est un aimant plat (66), positionné de préférence dans le logement (70) de façon orthogonale à l'axe de rotation (A) de l'organe rotatif de commande (21), l'aimant plat (66) étant, de manière encore préférée, centré sur l'axe de rotation (A) de l'organe rotatif de commande (21).

5. Vanne de circulation de fluide selon l'une quelconque des revendications précédentes, dans laquelle l'organe rotatif de commande (21) comporte une roue à secteur dentée (22).

6. Vanne de circulation de fluide selon l'une quelconque des revendications précédentes, dans laquelle l'organe rotatif de commande (21) est solidaire de l'arbre (4), l'organe rotatif de commande (21) étant de préférence surmoulé sur l'arbre (4).

7. Vanne de circulation de fluide selon l'une quelconque des revendications 1 à 5, dans laquelle l'organe rotatif de commande (21) est solidaire d'une jupe adaptée à entrainer en rotation un attelage solidaire de l'arbre (4), l'attelage étant guidé par une came à chemin de came, de telle sorte qu'une rotation de l'organe rotatif de commande (21) provoque un mouvement de translation de l'arbre (4).

8. Vanne de circulation de fluide selon l'une quelconque des revendications précédentes, comportant en outre un ressort de rappel de l'organe rotatif de commande (21), de préférence dans une position de fermeture de la vanne de circulation ou dans une position d'ouverture maximale de la vanne.

9. Procédé de fabrication d'une vanne de circulation de fluide selon l'une quelconque des revendications précédentes, comprenant une étape de moulage de l'organe rotatif de commande (21) formant un logement (70) de réception d'une cible de capteur (66), dont la paroi (72) est formée par quatre murets (72), chaque muret (72) présentant au moins un relief en saillie ou nervure (73), de préférence au moins deux reliefs en saillies ou nervures (73).

## Patentansprüche

1. Flüssigkeitszirkulationsventil, insbesondere für ein Kraftfahrzeug, umfassend einen Körper (2), der eine Flüssigkeitsdurchgangsleitung (3) aufweist, eine Verschlussklappe (5) der Leitung (3), eine Welle (4), auf der die Verschlussklappe (5) befestigt ist, und ein drehbare Steuerelement (21) der welle (4), dessen Drehung selektiv das Öffnen oder Schließen der Leitung (3) durch die Verschlussklappe (5) steuert, wobei das drehbare Steuerelement (21) eine Aussparung zur Aufnahme (70) eines Ziels eines Sensors (66) umfasst, deren Wand (72) von vier Leisten (72) gebildet ist, **dadurch gekennzeichnet, dass** jede Leiste (72) mindestens ein vorspringendes Relief oder eine Rippe (73), vorzugsweise mindestens zwei vorspringende Reliefs oder Rippen (73), umfasst.

2. Flüssigkeitszirkulationsventil nach Anspruch 1, bei dem das Sensorziel (66) und die Aussparung (70) eine im Wesentlichen rechteckige parallelflache Form haben.

3. Flüssigkeitszirkulationsventil nach einem der vorhergehenden Ansprüche, bei dem sich das oder die vorspringenden Reliefs oder Rippen (73) im Wesentlichen parallel zur Drehachse (A) des drehbaren Steuerelements (21) erstrecken.

4. Flüssigkeitszirkulationsventil nach einem der vorhergehenden Ansprüche, bei dem das Sensorziel ein flacher Magnet (66) ist, der vorzugsweise in der Aussparung (70) orthogonal zur Drehachse (A) des drehbaren Steuerelements (21) positioniert ist, wobei der flache Magnet (66) auf besonders bevorzugte Weise auf der Drehachse (A) des drehbaren Steuerelements (21) zentriert ist.

5. Flüssigkeitszirkulationsventil nach einem der vorhergehenden Ansprüche, bei dem das drehbare Steuerelement (21) ein Zahnrad (22) umfasst.

6. Flüssigkeitszirkulationsventil nach einem der vorhergehenden Ansprüche, bei dem das drehbare Steuerelement (21) mit der Welle (4) verbunden ist, wobei das drehbare Steuerelement (21) vorzugsweise auf die Welle (4) aufgeformt ist.

7. Flüssigkeitszirkulationsventil nach einem der Ansprüche 1 bis 5, bei dem das drehbare Steuerelement (21) mit einer Schürze verbunden ist, die geeignet ist, eine mit der Welle (4) verbundene Anhängevorrichtung in Drehung anzutreiben, wobei die Anhängevorrichtung von einem Nocken mit einer Nockenbahn geführt wird, so dass eine Drehung des drehbaren Steuerelements (21) eine Translationsbewegung der Welle (4) hervorruft.

8. Flüssigkeitszirkulationsventil nach einem der vorhergehenden Ansprüche, ferner umfassend eine Feder zur Rückstellung des drehbaren Steuerelements (21) vorzugsweise in eine Verschlussposition des Zirkulationsventils oder in eine maximale Öffnungsposition des Ventils.

9. Verfahren zur Herstellung eines Flüssigkeitszirkulationsventils nach einem der vorhergehenden Ansprüche, umfassend einen Schritt des Gussformens des drehbaren Steuerelements (21), das eine Aussparung (70) zur Aufnahme eines Sensorziels (66) bildet, deren Wand (72) von vier Leisten (72) gebildet ist, wobei jede Leiste (72) mindestens ein vorspringendes Relief oder eine Rippe (73), vorzugsweise mindestens zwei vorspringende Reliefs oder Rippen (73), umfasst.

## Claims

1. Fluid-circulation valve, in particular for a motor vehicle, comprising a body (2) having a duct (3) for the passage of a fluid, a shut-off flap (5) which shuts off the duct (3), a shaft (4) on which the shut-off flap (5) is fastened, and a rotary control member (21) for the shaft (4), the rotation of which selectively controls the opening and the closing of the duct (3) by the shut-off flap (5), in which the rotary control member (21) comprises a housing (70) for receiving a sensor target (66), the wall (72) of which housing is formed by four wall portions (72), **characterized in that** each wall portion (72) has at least one projecting relief or rib (73), preferably at least two projecting reliefs or ribs (73).

2. Fluid-circulation valve according to Claim 1, in which the sensor target (66) and the housing (70) have a substantially rectangular parallelepipedal shape.

3. Fluid-circulation valve according to any one of the preceding claims, in which the projecting relief or reliefs or ribs (73) extend substantially parallel to the axis of rotation (A) of the rotary control member (21) .

4. Fluid-circulation valve according to any one of the preceding claims, in which the sensor target is a flat magnet (66), which is preferably positioned in the housing (70) orthogonally to the axis of rotation (A) of the rotary control member (21), the flat magnet (66) being, more preferably still, centred on the axis of rotation (A) of the rotary control member (21).

5. Fluid-circulation valve according to any one of the preceding claims, in which the rotary control member (21) comprises a toothed sector wheel (22).

6. Fluid-circulation valve according to any one of the preceding claims, in which the rotary control member (21) is secured to the shaft (4), the rotary control member (21) preferably being overmoulded onto the shaft (4).

7. Fluid-circulation valve according to any one of Claims 1 to 5, in which the rotary control member (21) is secured to a skirt adapted to rotate a coupling secured to the shaft (4), the coupling being guided by a cam with a camway such that a rotation of the rotary control member (21) brings about a translational movement of the shaft (4).

8. Fluid-circulation valve according to any one of the preceding claims, additionally comprising a return spring for the rotary control member (21), preferably for returning it into a closing position of the circulation valve or into a maximum opening position of the valve.

9. Method for manufacturing a fluid-circulation valve according to any one of the preceding claims, comprising a step of moulding the rotary control member (21), forming a housing (70) for receiving a sensor target (66), the wall (72) of which housing is formed by four wall portions (72), each wall portion (72) having at least one projecting relief or rib (73), preferably at least two projecting reliefs or ribs (73).
